# EUROPEAN PATENT APPLICATION

(11) **EP 1 976 216 A1**
(43) Date of publication of application: **01.10.2008**
(21) Application number: 06828387.8
(22) Date of filing: 18.12.2006
(51) Int. Cl.: H04L 29/06, G06F 13/00

(54) **A METHOD AND A DEVICE FOR COPYING AND DISTRIBUTING DATA STREAMS ON CROSS NETWORK UNSYMMETRICALLY**

(30) Priority: 16.01.2006 CN 200610011197
(71) Applicant: Soooner Digital Corp., Beijing 100085 (CN)
(72) Inventor: WU, Tong, Beijing 100085 (CN); ZHI, Xiaomu, Beijing 100085 (CN); WANG, Binzhong, Beijing 100085 (CN); WANG, Hailong, Beijing 100085 (CN); MENG, Xianfa, Beijing 100085 (CN)
(74) Representative: Koch Müller Patentanwaltsgesellschaft mbH
(86) International application number: PCT/CN2006/003476
(87) International publication number: WO 2007/082451

(57) **Abstract**

A method for asymmetrically duplicating and distributing data stream, which is executed in a device having one or more network adapters, each network adapter is configured with a network address, the method comprising steps of: establishing at least one LIP according to system configuration or a user's request; establishing at least one LOP according to the system configuration or the user's request; establishing a mapping relation between the at least one LIP and the at least one LOP according to the system configuration or the user's request; multi-duplicating each of the data streams received from the at least one LIP according to the mapping relation; and transmitting the multi-duplicated data streams to one or more users via the one or more LOPs corresponding to the LIP.

## Description

### FIELD OF THE INVENTION

The present invention relates to data transmission filed, and more particularly, to a method and device for asymmetrically duplicating and distributing data streams in the Internet.

### BACKGROUND

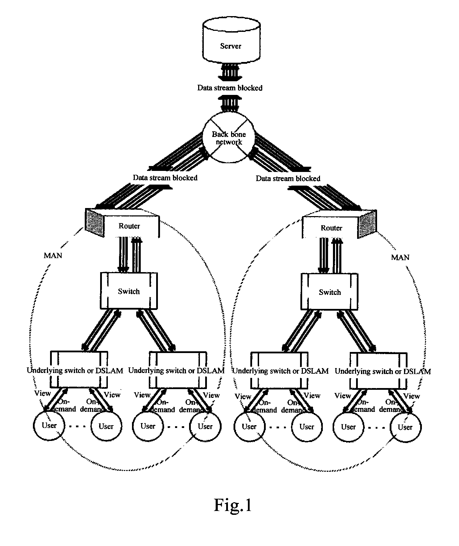

Figure 1 illustrates a schematic diagram of the data stream service in prior art. As shown in Figure 1, the current Internet is constituted by a plurality of Backbone nodes and MANs (metropolitan area networks). A MAN is a pyramid type of infrastructure that is a hierarchical network formed by layers of convergence devices and switching devices, and the infrastructure is characterized in that the total bandwidth of the underlying layer is much larger than that of the upper layer, while most of users are located at the underlying layer of the network and most of services are processed at the upper layer of the network. With development of the wideband Internet, there is an increasing demand for viewing TV or other video programs on the Internet, and traffic for transmission on the network becomes more and more large.

According to conventional data stream services, when a user is searching for a service, data streams will all flow to the upper layer of a network, such that network congestion may be occurred. As can be seen from Figure 1, the data stream congestion mainly occurs at egress of a MAN, an edge router accessed by the user, a website or other content servers. Further, current video services all employ B/S or C/S mode, in which all the services are provided by the servers. As a result, massive services make the capacity of a server large and thus the cost thereof expensive.

The multicast technique has been used to solve the above problems of network congestion and server capacity. However, the multicast technique can't be well supported by the Internet due to the infrastructure characteristic of the Internet, especially for a network consisted of ADSLs.

Therefore, a novel method and device for asymmetrically duplicating and distributing data streams is needed.

### SUMMARY

In view of the above problems, there is provided with a new method and device for asymmetrically duplicating and distributing data streams. With this method and device, data streams may be asymmetrically duplicated and redistributed at each layer of the network, such that the data streams can also form a pyramid type distribution. In this way, a user can acquire the data streams from the underlying layer of the pyramid type of network, instead of acquiring the data streams at the upper layer of the network, and thus the problems of network congestion and server capacity can be solved.

According to an aspect of the invention, there is provided with a method for asymmetrically duplicating and distributing data streams, which is executed in a device having one or more network adapters, each network adapter is configured with a network address, the method comprising steps of:
establishing at least one logic input port (LIP) according to system configuration or a user's request, so as to receive or request at least one data stream via the at least one LIP from a device that can provide the data streams according to a communication protocol;
establishing at least one logic output port (LOP) according to the system configuration or the user's request, so as to transmit the received data streams to one or more users via the at least one LOP according to the communication protocol;
establishing a mapping relation between the at least one LIP and the at least one LOP according to the system configuration or the user's request;
multi-duplicating each of the data streams received from the at least one LIP according to the mapping relation; and
transmitting the multi-duplicated data streams to one or more users via the one or more LOPs corresponding to the LIP according to the communication protocol.

According to another aspect of the invention, there is provided with a data stream asymmetrical duplication and distribution (DSADD) device having one or more network adapters, each network adapter is configured with a network address, the device comprising:
a logic input port (LIP) establishing unit for establishing at least one LIP according to system configuration or a user's request, so as to receive or request at least one data stream via the at least one LIP from a device that can provide the data streams according to a communication protocol;
a logic output port (LOP) establishing unit for establishing at least one LOP according to the system configuration or the user's request, so as to transmit the received data streams to one or more users via the at least one LOP according to the communication protocol;
a mapping relation establishing unit for establishing a mapping relation between the at least one LIP and the at least one LOP according to the system configuration or the user's request;
a duplicating unit for multi-duplicating each of the data streams received from the at least one LIP according to the mapping relation; and
a transmitting unit for transmitting the multi-duplicated data streams to one or more users via the one or more LOPs corresponding to the LIP according to the communication protocol.

Other objects and features of the present invention will become more apparent from the following detailed description and claims in conjunction with the accompany figures.

### BRIEF DESCRIPTION OF THE DRAWING(S)

The present invention will be described in detail with reference to the following figures, in which:

Figure 1 is a schematic diagram illustrating a data stream service in prior art;

Figure 2 shows an example of LIPs and LOPs of an IP address, and the mapping relations therebetween, according to the present invention;

Figure 3 is a general flowchart showing the process for asymmetrically duplicating and distributing data streams according to an embodiment of the present invention;

Figure 4 is a flowchart for establishing the LIP and a LOP according to an embodiment of the present invention;

Figure 5 is a flowchart for transmitting data streams according to an embodiment of the present invention;

Figure 6 is a block diagram of a data stream asymmetrical duplication and distribution (DSADD) device according to an embodiment of the present invention;

Figure 7 is a flowchart for asymmetrically duplicating and distributing data streams across network segments, according to an embodiment of the present invention;

Figure 8 is a schematic diagram of a data stream asymmetrical duplication and distribution (DSADD) system according to an embodiment of the present invention; and

Figure 9 is a schematic diagram for asymmetrically duplicating and distributing data streams by using a DSADD system of the present invention.

Throughout the drawings, the same reference numbers indicate similar or corresponding features or functions.

### DETAILED DESCRIPTION

Further description will be made to the present invention with reference to the figures.

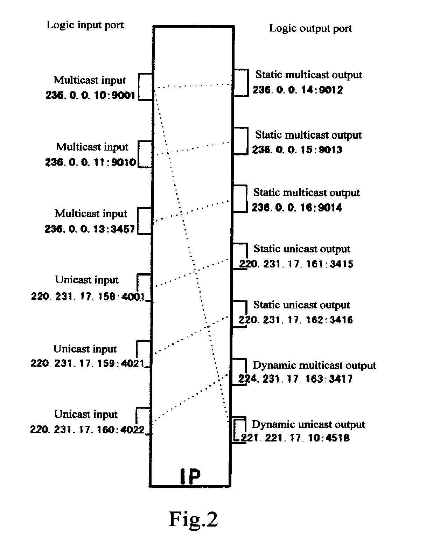

According to an embodiment of the invention, the asymmetrical duplication and distribution of data streams is carried out on a basis of a device with one or more network adapters, which are configured with one or more IP addresses. Each IP address may have one or more LIPs and one or more LOPs. Figure 2 shows an example of LIPs and LOPs of an IP address of the present invention, and the mapping relations therebetween. In Figure 2, the LIPs and LOPs are all represented by their corresponding IP addresses plus their port numbers.

As shown in Figure 2, the LIPs and LOPs can be classified into dynamic ports and static ports according to their manners of establishment.

The dynamic port refers to a LIP or a LOP that is established temporally or dynamically after a user's request is received and a link is established, and the mapping relation between the dynamic port and its corresponding LOP or LIP is also established temporally. When the user exits, interrupts the request or selects other logic ports, the established dynamic port is closed and the mapping relation is accordingly released. Thus, the dynamic port is established for providing users with services.

The static port refers to a LIP or a LOP established according to system configuration when the device starts up. The static port can be established regardless that a request has been sent from the user or not, and it can exist without the user's request. A static LOP usually forms a fixed mapping relation with a static LIP. According to the mapping relation, a data stream can be directly duplicated from the static LIP to the static LOP, and thus the data stream may be transmitted to a data stream asymmetrical duplication and distribution (DSADD) device at the next stage. A user may receive the data stream directly, without sending a request to the device or establishing a link with the device, if the user knows the address of the static LOP. Therefore, a static LOP is mainly for providing data sources to the LIP of the DSADD device at the next stage, and it also can serve for the user directly.

In addition, any LIP may receive data in a unicast or multicast mode, and any LOP may transmit data in a unicast or multicast mode. Therefore, the IP addresses in the port representations of Figure 2 are multicast IP addresses or unicast IP addresses. Thus, the LIP and LOP may be further classified into static multicast LIP and LOP, static unicast LIP and LOP, dynamic unicast LIP and LOP, and dynamic multicast LIP and LOP.

As shown in Figure 2, a LIP may correspond to one or more logic output ports and a mapping relation can be established therebetween. Further, any type of LIP may correspond to any type of LOP and a mapping relation can also established therebetween. In Figure 2, for example, a mapping relation is established between the static multicast LIP 236.0.0.1:9001 and static multicast LOP 236.0.0.14:9012 and dynamic unicast LOP 221.221.17.10:4518; and a mapping relation is established between the static unicast LIP 220.231.17.160:4022 and dynamic multicast LOP 224.231.17.163:3417.

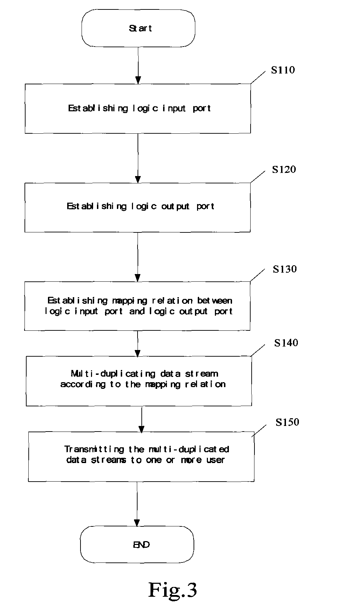

The specific process of a method for asymmetrically duplicating and distributing data streams according to the present invention, which can be implemented in above network communication device, will be described in detail with reference to Figure 3.

Figure 3 is a general flowchart showing the process for asymmetrically duplicating and distributing data streams according to an embodiment of the present invention.

As shown in Figure 3, at step S110, a system configuration is read after the device is started up. Then, at least one LIP as shown in Figure 2, such as the multicast LIP 236.0.0.10:9001, is established according to the read system configuration or a received user's request, such that data streams can be received via the LIP from the data source or a DSADD device at previous stage. Then the procedure proceeds to step S120.

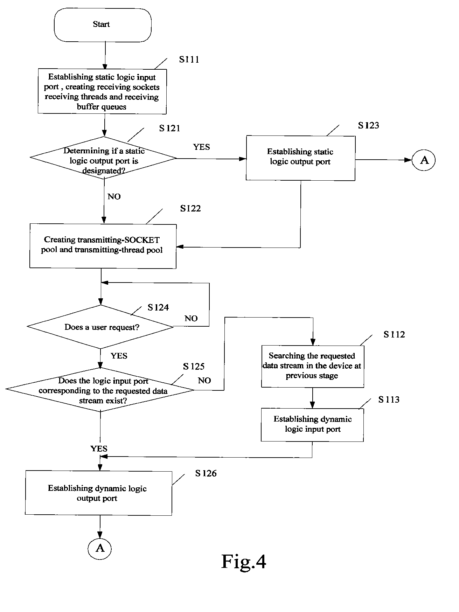

At step S120, a LOP as shown in Figure 2, such as the static multicast LOP 236.0.0.14:9012, is established according to the system configuration of the device or the received user's request. The specific process for establishing the LIP and LOP will be described below with reference to Figure 4. Then, the procedure proceeds to step S130.

At step S130, the mapping relation as shown in Figure 2 is established between the LIP and the LOP, such as the multicast LIP 236.0.0.10:9001, the static multicast LOP 236.0.0.14:9012 and dynamic unicast LOP 221.221.17.10:4518, according to the distribution path for data streams existed in the system configuration or the data stream requested by the user. The procedure proceeds to step S 140 after the mapping relation between the LIP and the LOP is established.

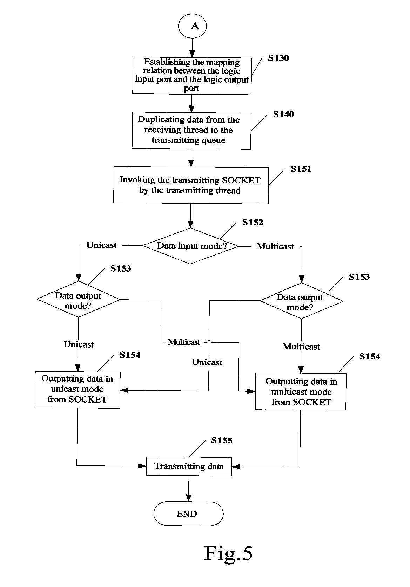

At step S140, when the data is received from the data source via the LIP, the data stream received from the LIP is multi-duplicated according to the mapping relation between the LIP and the LOP. For example, according to the mapping relations in Figure 2, the DSADD device duplicates the data stream from the multicast LIP 236.0.0.10:9001 into two data streams transmitted from the static multicast LOP 236.0.0.14:9012 and the dynamic unicast LOP 221.221.17.10:4518, respectively. Then, at step S150, the multi-duplicated data streams are transmitted to one or more users via corresponding LOPs according to a communication protocol. Here, the communication protocol is, for example, TCP or UDP. The specific detail for transmitting the data streams will be detailed described below with reference to Figure 5.

It is noted that, when the user's request is not interrupted or the user does not exit, the above duplicating and distributing procedure is repeated so as to complete the duplication and distribution process of the data stream between the same IP or different IPs.

When the user's request is interrupted or the user exits, the current LOP is closed, the transmitting queue is cleared, and the duplication and distribution process of the data stream is ended.

How the LIP and LOP are established when duplicating and distributing data streams will be detailed described with reference to Figure 4. Figure 4 is a flowchart for establishing a LIP and a LOP according to an embodiment of the present invention.

As shown in Figure 4, the method of the present invention begins with step S111. At step S111, after reading the system configuration, the DSADD device establishes static LIPs based on the system configuration, and creates receiving SOCKETs according to the number of the established static LIPs, and receiving threads and receiving buffering queues are created at the same time. Here, the created receiving threads may receive or request data streams from the data source via the established LIPs by using one or more receiving SOCKETs, and the received data will be buffered in the receiving buffering queues. It is noted that the SOCKET used herein may be replaced by other protocol stack with same function.

Then, the procedure proceeds to step S121. At step S121, it is determined whether a static LOP corresponding to the established static LIP is designated, according to the system configuration. When the determination result of step S121 is YES, the procedure proceeds to Step S123. At step S123, a static LOP is established and corresponding transmitting SOCKET pool and transmitting queue are created. Then, the procedure proceeds to step S130 for establishing the mapping relations. Subsequently, the received data stream is duplicated into the transmitting queue, and then the subsequent transmitting process is completed. The specific process of the transmission will be detailed described with reference to Figure 5.

When the determination result of step S 121 is NO or after the establishment of the static LOP is completed, the procedure proceeds to Step S122. In other words, the device is required to get ready for providing dynamic services for users, regardless that a designated static LOP is existed or not. In special, at step S122, the transmitting SOCKET pool and transmitting thread pool are created. Then , the procedure proceeds to step S124. At step S124, it waits for a user to request a data stream, that is, it is determined whether there is a user's request. If a user's request is received at step S124, the procedure proceeds to step S125, otherwise, it keeps on waiting for a user's request.

At step S125, it is determined whether there is a LIP corresponding to the specific data stream requested by the user. If it is determined at step S125 that the LIP corresponding to the specific data stream has been existed, the procedure proceeds to step S126. If the corresponding LIP has not been established yet, the procedure proceeds to step S112. At step S 112, the device searches in the device at previous stage for the data stream requested by the user and searches upward layer by layer for a device that can provide the request data stream. After finding the device that can provide the request data stream, the procedure proceeds to step S113. At step S113, a dynamic LIP corresponding to the specific data stream is dynamically established, and a corresponding receiving SOCKET, receiving thread and receiving buffering queue are created. Then, the procedure proceeds to step S126.

At step S126, an SOCKET is allocated to establish a link with the user, and a transmitting queue and a dynamic LOP are created. Thus, the process for establishing the LIP and LOP is completed.

The LIP of the present embodiment may comprise only a dynamic LIP established according to the user's request. In this case, the procedure begins directly with creating a transmitting SOCKET pool and a transmitting thread pool, and waiting for the user's request, then establishing the dynamic LIP and corresponding LOP based on the user's request according to the steps shown in Figure 4.

Transmission of the data streams will be detailed described with reference to Figure 5. Figure 5 is a flowchart for transmitting data streams according to an embodiment of the present invention.

As shown in Figure 5, after the LIP and LOP are established as Figure 4, the mapping relation thereof is established and the corresponding data stream is duplicated to a transmitting queue at step S130 and S140. Then, at step S151, a relatively idle thread is selected from the transmitting thread pool to invoke a transmitting SOCKET, so as to prepare for transmitting data streams through the LOP. Then, the procedure proceeds to step S152.

At step S152, the data input mode of the corresponding LIP is determined, that is, it is determined whether the data input mode of the LIP is a unicast or multicast mode. Then, the procedure proceeds to step S 153.

At step S153, the data output mode of the LOP is determined, that is, it is determined whether the data output mode of the LOP is a unicast or multicast mode. Then, the procedure proceeds to step S 154. It should be noted that, the order of step S152 and step S 153 may be exchanged.

At step S 154, the data output mode of the data stream to be output is accordingly converted according to the determination result of step S152 and S153. In particularly, when the data output mode of the LOP is determined to be a multicast mode at step S153, if the data input mode of corresponding LIP is determined to be a unicast mode at step S152, the transmitting SOCKET will convert the mode of the data stream from a unicast mode into a multicast mode at the time of transmitting data; and if the data input mode for corresponding LIP is determined to be a multicast mode at step S152, the mode of the data stream is not required to be converted at the time of transmitting data.

Similarly, when the data output mode of the LOP is determined to be a unicast mode at step S153, if the data input mode of corresponding LIP is determined to be a multicast mode at step S152, the transmitting SOCKET will convert the mode of the data stream from a multicast mode to a unicast mode at the time of transmitting data; and if the data input mode of corresponding LIP is determined to be a unicast mode at step S152, the mode of the data stream is not required to be converted at the time of transmitting data. After performing the mode conversion on the data stream correspondingly, the procedure proceeds to step S155.

At step S155, the data stream after converting its mode will be transmitted from one or more LOPs to one or more users by using the invoked transmitting SOCKET. Thus, the process for transmitting the data stream is completed.

The above duplication and transmission procedure is described with respect to one user's request. When there are multiple user's requests, or when a new user's request is coming, the above step S 125 to step S 155 are required to be repeated.

In the above, the method for asymmetrically duplicating and distributing data streams according to the embodiments of the present invention has been described with reference to Figure 2 to Figure 5.

The above method for asymmetrically duplicating and distributing data streams according to the present invention may be implemented with software, hardware or combination thereof.

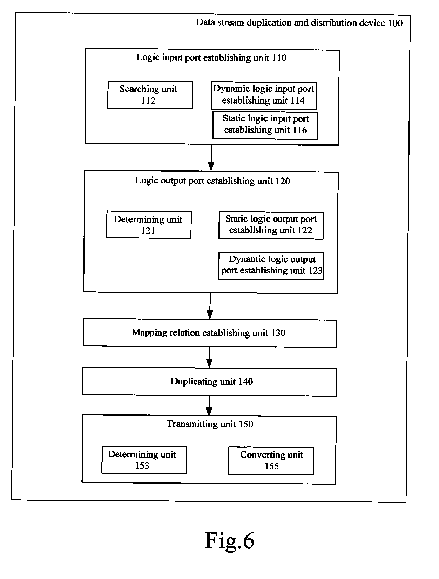

Figure 6 is a block diagram of a DSADD device 100 according to an embodiment of the present invention. As shown in Figure 6, the DSADD device 100 includes a LIP establishing unit 110, a LOP establishing unit 120, a mapping relation establishing unit 130, a duplicating unit 140 and a transmitting unit 150.

After reading the system configuration, a static LIP establishing unit 116 in the LIP establishing unit 110 will establish static LIPs according to the read system configuration, and create one or more receiving SOCKETs, receiving threads and receiving buffering queues according to the number of the established static LIPs. Moreover, the LIP establishing unit 110 further includes a searching unit 112 for searching in DSADD devices at previous stages for a device that can provide a specific data stream request by a user when the LIP corresponding to the request specific data stream has not been established. Then, when the searching unit 112 finds the device that can provide the request specific data stream, a dynamic LIP establishing unit 114 in the LIP establishing unit 110 will establish dynamic LIPs corresponding to the specific data stream dynamically, and create one or more receiving SOCKETs, receiving threads and receiving buffering queues according to the number of the established dynamic LIPs.

The LOP establishing unit 120 includes a determining unit 121, a static LOP establishing unit 122 and a dynamic LOP establishing unit 123. The determining unit 121 is used to determine whether the system configuration has designated a static LOP according to the read system configuration, and to determine whether the LIP corresponding to the specific data stream requested by the user has been established when receiving the user's request. The static LOP establishing unit 122 and the dynamic LOP establishing unit 123 establish a static LOP and a dynamic LOP respectively, according to the determination result of the determining unit 121.

After establishing the LOP, the mapping relation establishing unit 130 establishes a mapping relation between the LIP and the LOP. When the mapping relation between the LIP and the LOP has been established, the duplicating unit 140 multi-duplicates the data stream received by the receiving thread into the transmitting queue, and informs the transmitting thread pool to invoke a relatively idle transmitting thread to transmit the data stream by using the transmitting SOCKET. After receiving the transmitting information, the transmitting unit 150 invokes a relatively idle transmitting thread to transmit the data stream from one or more logic output ports to one or more users by using the transmitting SOCKET. Here, the transmitting unit 150 further includes a determining unit 153 and a converting unit 155. The determining unit 153 is used to determine the data output mode for the LOP and the data input mode for the LIP. The converting unit 155 is used to convert the output mode of the data stream to be transmitted.

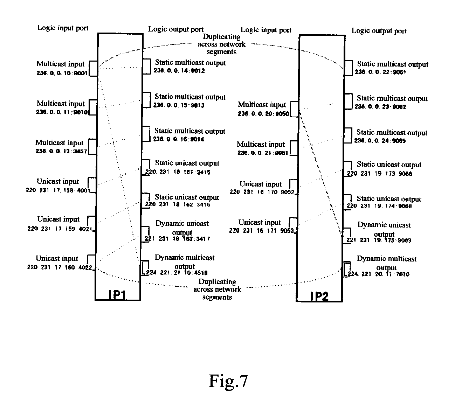

A case that IPs of the devices are in different network segments may usually occur between two devices for data transmission. In this case, the conventional method used is to realize data transmission between the devices by using networks, which may increase the network load such that network bandwidth may be increased. Since the DSADD device has a function of duplicating data streams across network segments, with the DSADD device, data will not pass through the network during transmission, and thus the network bandwidth can be saved. This will be detailed explained below with reference to Figure 7.

Figure 7 is a schematic diagram illustrating the duplication of data streams across IPs of different network segments, using the DSADD device according to an embodiment of the present invention.

The DSADD device may have one or more IP addresses, which may belong to the same network segment or different network segments. Figure 7 shows two IPs in different network segments within the same device, i.e. IP1 and IP2. For example, IP1 may be an IP address in the Internet, while IP2 is an IP address in the intranet. Since mapping relations may be arbitrarily established between LOPs and LIPs of different IPs in the DSADD device according to present invention, as shown in Figure 7, a mapping relation is established between the multicast LIP 236.0.0.10:9001 of IP1 and the static multicast LOP 236.0.0.22:9061 of IP2. The data stream input from the multicast LIP 236.0.0.10:9001 of IP1 may be duplicated to the memory of the device firstly, and then the data in the device memory will be duplicated to the static multicast LOP 236.0.0.22:9061 of IP2 through internal switching. Thereby, data stream of IP1 may be duplicated and distributed to IP2 instead of passing through a network. That is, data stream exchange and duplication between IPs of different network segments may be completed by the device memory instead of passing through a network.

It should be noted that reception and transmission of the logic port is independent from format of the data stream. For example, video stream, audio data stream, file stream or data streams of other format can be received and transmitted.

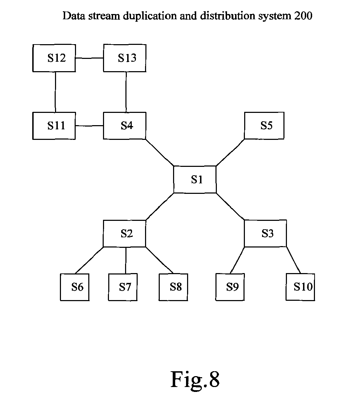

Figure 8 is a schematic diagram of the DSADD system 200 according to an embodiment of the present invention. In Figure 8, the DSADD device 100 is indicated as S1-S13. The DSADD system 200 is consisted of multiple DSADD devices S1-S13 connected in cascade. Here, a DSADD device may act as a data source of another DSADD device. The DSADD system may be constructed in different network constructions according to actual requirement. It can be seen from Figure 8 that, devices S1-S13 form a star network, in which devices S1, S2, S3 and S6-S10 form a pyramid network, and devices S4 and S11-S13 form a loop network.

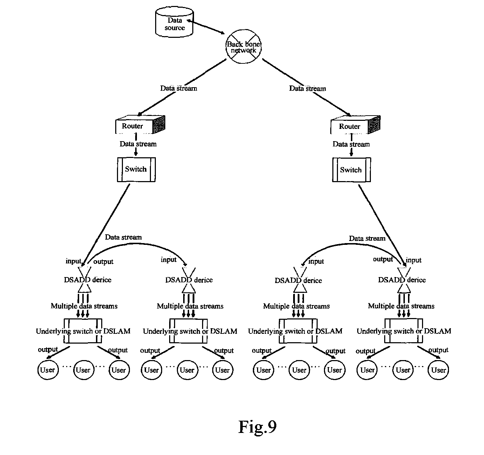

Figure 9 is a schematic diagram illustrating a process for asymmetrically duplicating and distributing data streams using the DSADD system according to the present invention. In Figure 9, the DSADD devices in the DSADD system may be managed by a uniform load balance system. In operation, a user accesses the load balance system firstly to acquire a program list. The load balance system will select a DSADD device that is nearest to the user and has the smallest load from the DSADD system based on the smallest load criterion and the nearest node criterion, and inform the user of the selected device. Then, the user sends a request to the DSADD device that is nearest and has the smallest load, according to information returned from the load balance system. Upon receiving the request, the DSADD device transmits the data stream selected by the user to the user. In this way, the asymmetrical duplication and distribution of data streams will be achieved.

The methods or techniques described in connection with the embodiments disclosed herein may be embodied directly in hardware, in a software module executed by a processor, or in a combination thereof. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC. The ASIC may reside in the terminal, or elsewhere. In the alternative, the processor and the storage medium may reside as discrete components in the terminal, or elsewhere.

### Benefit Effect

It can be seen from the above detailed description of the present invention with reference to the figures that, with method and device provided in the present invention for duplicating and distributing data streams, data streams will be duplicated and redistributed at each layer of the network such that the data streams will form a pyramid type distribution. That is, a data stream will be multi-duplicated into multiple data streams at each layer of the network, and thus the data streams are distributed layer by layer such that a user may select and acquire corresponding data stream service at underlying layer of the network without obtaining the data stream directly from the data source. In this way, data traffic in the network is greatly reduced. Therefore, not only the problem of current video service but also problems of other data stream service may be solved, and thus network congestion may be solved effectively and costs of servers may be reduced.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A method for asymmetrically duplicating and distributing data streams, which is executed in a device having one or more network adapters, each network adapter is configured with a network address, the method comprising steps of:
establishing at least one logic input port (LIP) according to system configuration or a user's request, so as to receive or request at least one data stream via the at least one LIP from a device that can provide the data streams according to a communication protocol;
establishing at least one logic output port (LOP) according to the system configuration or the user's request, so as to transmit the received data streams to one or more users via the at least one LOP according to the communication protocol;
establishing a mapping relation between the at least one LIP and the at least one LOP according to the system configuration or the user's request;
multi-duplicating each of the data streams received from the at least one LIP according to the mapping relation; and
transmitting the multi-duplicated data streams to one or more users via the one or more LOPs corresponding to the LIP, according to the communication protocol.

2. The method of claim 1, wherein the step of establishing the LIP comprises:
upon receiving the user's request, if the LIP corresponding to specific data stream that the user desired has not been established, searching for a device that can provide the specific data stream; and
after the device that can provide the specific data stream is found, dynamically establishing a dynamic LIP corresponding to the specific data stream, and
the method further comprises:
when the reception of the specific data stream is ended or interrupted by the user, stopping duplicating and transmitting the data stream, and closing the dynamic LIP.

3. The method of claim 1 or 2, wherein the step of establishing the LOP comprises:
upon receiving the user's request, if the LIP corresponding to specific data stream that the user desired has been established, dynamically establishing a dynamical LOP for transmitting the specific data stream according to the user's request, and
the method further comprises:
when the reception of the specific data stream is ended or interrupted by the user, stopping duplicating and transmitting the data stream, and closing the dynamic LOP.

4. The method of claim 1, wherein the step of establishing the LIP comprises:
establishing a static LIP according to the system configuration, and
when the device is started up, receiving corresponding data streams from the static LIP.

5. The method of claim 4, wherein the step of establishing the LOP comprises:
establishing a static LOP according to the system configuration, and
the static LOP has a fixed mapping relation with the static LIP.

6. The method of claim 1, wherein the step of transmitting the data stream comprises:
if a data output mode required at the LOP of the mapping relation is different from a data input mode of the corresponding LIP, performing mode conversion on the data stream to be output from the LOP, so as to make the data output mode of the data stream consistent with the data output mode required at the LOP.

7. The method of claim 6, wherein the step of performing mode conversion comprises:
if the data output mode required at the LOP is a multicast mode and the data input mode of the corresponding LIP is a unicast mode, converting the unicast mode of the data stream into a multicast mode for outputting; and
if the data output mode required at the LOP is a unicast mode and the data input mode of the corresponding LIP is a multicast mode, converting the multicast mode of the data stream into a unicast mode for outputting.

8. The method of claim 1, wherein the communication protocol is TCP or UDP, the network address is an IP address, and the data stream is received and transmitted by using SOCKET.

9. The method of claim 8, wherein the step of establishing the LIP further comprises:
creating a transmitting SOCKET pool for transmitting the received data stream.

10. The method of claim 8, wherein the LIP and the LOP, for both of which the mapping relation has been established, have the same IP address or different IP addresses.

11. The method of claim 10, wherein the different IP addresses belong to a same network segment or different network segments.

12. The method of claim 11, wherein, when the different IP addresses belong to different network segments, the data stream is duplicated by switching data in a memory, so as to transmit to the user the data stream received from the LIP via the corresponding LOP.

13. The method of claim 1, wherein the device that can provide the data stream transmits the identical data stream to a plurality of the devices via multiple paths in parallel.

14. A device for asymmetrically duplicating and distributing data streams, wherein the device has one or more network adapters and each network adapter is configured with a network address, the device comprising:
a logic input port (LIP) establishing unit for establishing at least one LIP according to system configuration or a user's request, so as to receive or request at least one data stream via the at least one LIP from a device that can provide the data streams according to a communication protocol;
a logic output port (LOP) establishing unit for establishing at least one LOP according to the system configuration or the user's request, so as to transmit the received data streams to one or more users via the at least one LOP according to the communication protocol;
a mapping relation establishing unit for establishing a mapping relation between the at least one LIP and the at least one LOP according to the system configuration or the user's request;
a duplicating unit for multi-duplicating each of the data streams received from the at least one LIP according to the mapping relation; and
a transmitting unit for transmitting the multi-duplicated data streams to one or more users via the one or more LOPs corresponding to the LIP according to the communication protocol.

15. The device of claim 14, wherein the LIP establishing unit further comprises:
a searching unit for, upon receiving the user's request, searching for a device that can provide a specific data stream desired by the user if the LIP corresponding to the specific data stream has not been established; and
a dynamic LIP establishing unit for dynamically establishing a dynamic logic input port corresponding to the specific data stream if the device that can provide the specific data stream is found.

16. The device of claim 14 or 15, wherein the LOP establishing unit further comprises:
a determining unit for, upon receiving the user's request, determining whether the LIP corresponding to the specific data stream desired by the user has been established;
a dynamic LOP establishing unit for establishing a dynamic LOP for transmitting the specific data stream according to the user's request if the LIP corresponding to the specific data stream desired by the user has been established; and
the device further comprises: a reset unit for stopping duplication and transmission of the data stream and closing the dynamic LOP when the reception of the specific data stream is ended or interrupted by the user.

17. The device of claim 14, wherein the LIP establishing unit further comprises:
a static LIP establishing unit for establishing a static LIP according to the system configuration, and for receiving corresponding data streams from the static LIP when the device is started up.

18. The device of claim 17, wherein the LOP establishing unit further comprises:
a static LOP establishing unit for establishing a static LOP according to the system configuration, and wherein the static LOP has a fixed mapping relation with the static LIP.

19. The device of claim 14, wherein the transmitting unit comprises:
a converting unit for performing mode conversion on the data stream to be output from the LOP if a data output mode required at the LOP of the mapping relation is different from a data input mode of the corresponding LIP, so as to make the data output mode of the data stream consistent with the data output mode required at the LOP.

20. The device of claim 19, wherein,
if the data output mode required at the LOP is a multicast mode and the data input mode of the corresponding LIP is a unicast mode, the converting unit converts the unicast mode of the data stream into a multicast mode for outputting; and
if the data output mode required at the LOP is a unicast mode and the data input mode of the corresponding LIP is a multicast mode, the converting unit converts the multicast mode of the data stream into a unicast mode for outputting.

21. The device of claim 14, wherein the communication protocol is TCP or UDP, the network address is an IP address, and the data stream is received and transmitted by using SOCKET.

22. The device of claim 14, wherein the device that can provide the data stream is the device for asymmetrically duplicating and distributing data streams, for providing the identical data stream to a plurality of the devices via multiple paths in parallel.

23. The device of claim 21, wherein the LIP and the LOP, for both of which the mapping relation has been established, belong to a same IP address or different IP addresses.

24. The device of claim 23, wherein the different IP addresses belong to a same network segment or different network segments.

25. The device of claim 24, wherein, when the different IP addresses belong to different network segments, the data stream is duplicated by switching data in a memory, so as to transmit the data stream received from the LIP from corresponding LOP to the user.

26. A computer readable storage medium having a program containing code executable by a processor stored thereon, the processor is included in a device having one or more network adapters and each network adapter is configured with a network address, the codes causing the processor to:
establish at least one logic input port (LIP) according to system configuration or a user's request, so as to receive or request at least one data stream via the at least one LIP from a device that can provide the data streams according to a communication protocol;
establish at least one logic output port (LOP) according to the system configuration or the user's request, so as to transmit the received data streams to one or more users via the at least one LOP according to the communication protocol;
establish a mapping relation between the at least one LIP and the at least one LOP according to the system configuration or the user's request;
multi-duplicate each of the data streams received from the at least one LIP according to the mapping relation; and
transmit the multi-duplicated data streams to one or more users via the one or more LOPs corresponding to the LIP.
